# EUROPÄISCHE PATENTSCHRIFT

(11) **EP 3 768 135 B1**
(45) Veröffentlichungstag und Bekanntmachung des Hinweises auf die Patenterteilung: **02.08.2023**
(21) Anmeldenummer: 19709965.8
(22) Anmeldetag: 14.03.2019
(51) Int. Cl.: A47L 9/24, A47L 7/00

(54) **STAUBSAUGERSCHLAUCH**
VACUUM CLEANER HOSE
TUYAU D'ASPIRATEUR

(30) Priorität: 22.03.2018 EP 18163235
(43) Veröffentlichungstag der Anmeldung: 27.01.2021
(73) Patentinhaber: Hilti Aktiengesellschaft, 9494 Schaan (LI)
(72) Erfinder: HANSLMEIER, Xaver, 87665 Mauerstetten (DE)
(74) Vertreter: Hilti Aktiengesellschaft Corporate Intellectual Property
(86) Internationale Anmeldenummer: PCT/EP2019/056384
(87) Internationale Veröffentlichungsnummer: WO 2019/179867

(56) Entgegenhaltungen:
- EP-A1- 2 087 827
- WO-A2-97/27414
- CN-U- 203 214 207
- DE-A1-102011 083 319

## Beschreibung

Die vorliegende Erfindung betrifft einen Staubsaugerschlauch zum Anschluss an einen Nass- und Trockensauger, wobei der Staubsaugerschlauch ein sich in Längsrichtung erstreckendes inneres Lumen aufweist.

Staubsaugerschläuche der eingangs genannten Art sind grundsätzlich aus dem Stand der Technik bekannt und dienen beispielsweise dem Absaugen von Schmutzpartikeln beim Trennschleifen. Dabei ist beispielsweise ein Trennschleifer über den Staubsaugerschlauch mit einem Nass- und Trockensauger verbunden.

Ähnliche Saugvorrichtungen bzw. Schläuche werden beispielsweise in WO 1997 274 14 A2 und DE 10 2011 083 319 A1 offenbart. In der WO 1997 274 14 A2 wird eine Schlauchkombination mit einem ersten Schlauch und mindestens einem weiteren Schlauch offenbart, wobei der zweite Schlauch entlang einer gemeinsamen Berührungslinie an der Innenseite der Wand des ersten Schlauches befestigt ist. In der DE 10 2011 083 319 A1 wird ein Staubsauger beschrieben, bei dem eine Energiewandlungseinheit zumindest eine Energiewandlungsschnittstelle aufweist, an die eine konverterlose Werkzeugmaschine zu einer Energieversorgung einer bürstenlosen Antriebseinheit angeschlossen werden kann.

Es ist Aufgabe der vorliegenden Erfindung, einen Staubsaugerschlauch bereitzustellen, der ein verbessertes Saugverhalten begünstigt.

Die Aufgabe wird dadurch gelöst, dass innerhalb des Lumens, oder an das Lumen angrenzend, eine Strömungsleitgeometrie ausgebildet ist, mittels der eine während des Betriebs des Nass- und Trockensaugers auftretende Saugströmung beeinflusst wird, wobei die Strömungsleitgeometrie einen durchgehenden Steg aufweist.

Die Erfindung schließt die Erkenntnis ein, dass ein Staubsaugerschlauch, insbesondere ein Spiralschlauch, eines Nass- und Trockensaugers durch seine Geometrie sehr große Druck- und Strömungsverluste verursachen. Diese Verluste werden in erster Linie durch eine hohe Wandreibung und starke Randverwirbelung quer zur Schlauchachse hervorgerufen. Diese Verluste beeinträchtigen den Gesamtwirkungsgrad des Nass- und Trockensaugers erheblich.

Durch die erfindungsgemäß innerhalb des Lumens ausgebildete Strömungsleitgeometrie kann vorteilhafterweise eine Längswirbelform und somit eine Zentrierung der Saugströmung erreicht werden, die einen insgesamt vergleichsweise verlustarmen Medientransport begünstigt.

In einer bevorzugten Ausgestaltung erstreckt sich die Strömungsleitgeometrie in Radialrichtung nach innen.

Die Strömungsleitgeometrie kann sich über die Gesamtlänge des Staubsaugerschlauchs erstrecken oder verteilen. Bevorzugt erstreckt oder verteilt sich die Strömungsleitgeometrie spiralförmig über die Gesamtlänge des Staubsaugerschlauchs. Somit kann ein vorteilhafter Längswirbel über die Gesamtlänge des Schlauchs aufrechterhalten werden.

In einer weiteren bevorzugten Ausgestaltung weist die Strömungsleitgeometrie eine Mehrzahl diskreter Profilkörper auf. Alternativ oder zusätzlich kann die Strömungsleitgeometrie einen Kanal aufweisen.

Es hat sich als vorteilhaft herausgestellt, wenn die Strömungsleitgeometrie einen pyramidalen oder tonnenförmigen Querschnitt aufweist.

Besonders bevorzugt ist die Strömungsleitgeometrie an eine innere Oberfläche des Staubsaugerschlauchs angeschweißt.

In einer weiteren bevorzugten Ausgestaltung kann die Strömungsleitgeometrie durch eine in das Schlauchinnere gerichtete Einwölbung oder Einprägung der Schlauchaußenseite gebildet sein.

Vorzugsweise besteht der Staubsaugerschlauch aus Kunststoff. Der Staubsaugerschlauch kann einen im Wesentlichen konstanten Außendurchmesser aufweisen. Im Wesentlichen soll in diesem Zusammenhang einen konstanten Außendurchmesser ohne Berücksichtigung einer etwaigen äußeren Riffelung des Spiralschlauchs bedeuten.

In einer besonders bevorzugten Ausgestaltung ist der Staubsaugerschlauch als Spiralschlauch ausgebildet. Innerhalb des Staubsaugerschlauchs kann ein Innenschlauch oder ein Innenrohr ausgebildet sein, das sich über die Gesamtlänge des Staubsaugerschlauchs erstreckt und an dessen innerer Oberfläche die Strömungsleitgeometrie ausgebildet ist.

Die Erfindung wird ebenfalls gelöst durch ein Saugsystem mit einem Nass- und Trockensauger und einem Staubsaugerschlauch der vorbeschriebenen Art.

Weitere Vorteile ergeben sich aus der folgenden Figurenbeschreibung. In den Figuren sind verschiedene Ausführungsbeispiele der vorliegenden Erfindung dargestellt. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In den Figuren sind gleiche und gleichartige Komponenten mit gleichen Bezugszeichen beziffert.

Die folgenden Ausführungsbeispiele zeigen z.T. isolierte bevorzugte Ausführungsbeispiele gemäss den abhängigen Ansprüchen. Es sei noch darauf hingewiesen, dass die Strömungsleitgeometrie in allen Ausführungsbeispielen einen durchgehenden Steg aufweist, auch wenn dieser nicht in den jeweiligen Ausführungsbeispielen und Figuren gezeigt sein sollte.

Es zeigen:
- Fig. 1: ein erstes bevorzugtes Ausführungsbeispiel im Querschnitt;
- Fig. 2: das Ausführungsbeispiel der Fig. 1 in Seitenansicht;
- Fig. 3: ein zweites bevorzugtes Ausführungsbeispiel im Querschnitt;
- Fig. 4: das Ausführungsbeispiel der Fig. 3 in Seitenansicht;
- Fig. 5: ein drittes bevorzugtes Ausführungsbeispiel im Querschnitt;
- Fig. 6: das Ausführungsbeispiel der Fig. 5 in Seitenansicht;
- Fig. 7: ein viertes bevorzugtes Ausführungsbeispiel im Querschnitt; und
- Fig. 8: das Ausführungsbeispiel der Fig. 7 in Seitenansicht.

### Ausführungsbeispiele:

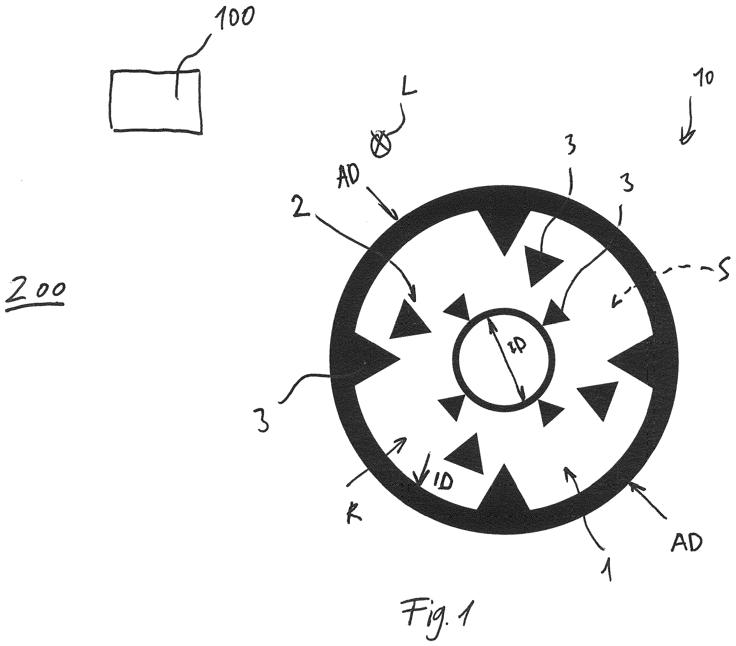

Fig. 1 zeigt einen Staubsaugeranschluss 10 zum Anschluss an einen Nass- und Trockensauger 100. Der Nass- und Trockensauger 100 und der Staubsaugerschlauch 10 können ein Saugsystem 200 bilden.

Der Staubsaugerschlauch 10 weist ein sich in Längsrichtung L erstreckendes inneres Lumen 1 auf. In Fig. 1 weist die Längsrichtung L in die Bildebene hinein.

Erfindungsgemäß ist innerhalb des Lumens 1 eine Strömungsleitgeometrie 2 ausgebildet, mittels der eine während des Betriebs des Nass- und Trockensaugers 100 auftretende Saugströmung S beeinflusst werden kann.

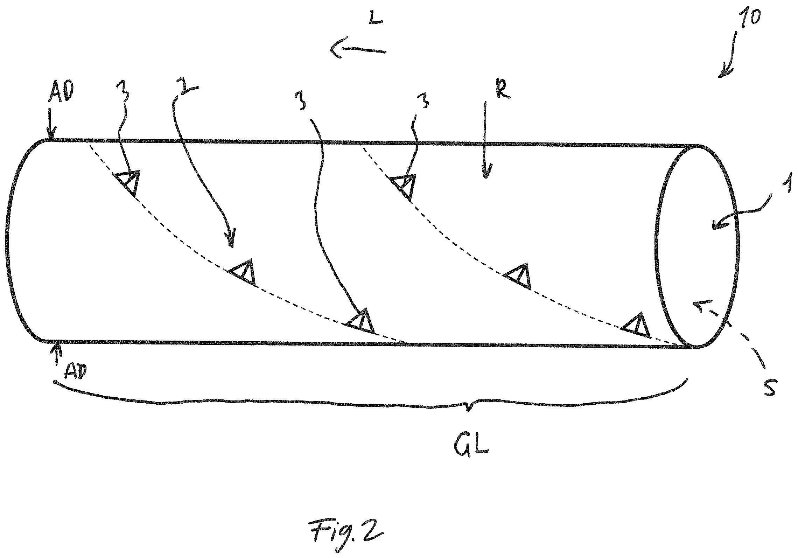

Der Staubsaugerschlauch 10 weist einen konstanten Außendurchmesser AD über seine Gesamtlänge GL auf (vgl. Fig. 2).

Fig. 1 zeigt einen perspektivischen Blick in das Schlauchinnere hinein, sodass sich der Innendurchmesser ID verjüngt, obgleich er, abgesehen von der Strömungsleitgeometrie 2, über die gesamte Länge des Staubsaugerschlauchs 10 konstant ist.

Wie ebenfalls der Fig. 1 entnommen werden kann, ist die Strömungsleitgeometrie 2 durch eine Mehrzahl diskreter Profilkörper 3 gebildet, die im vorliegenden Ausführungsbeispiel einen pyramidalen Querschnitt aufweisen. Erstreckt sich die Strömungsleitgeometrie 2, genauer gesagt die jeweiligen Spitzen der pyramidal ausgebildeten diskreten Profilkörper 3 in Radialrichtung R nach innen.

Die diskreten Profilkörper 3 sind dabei an eine innere Oberfläche des Staubsaugerschlauchs 10 angeschweißt. Der Staubsaugerschlauch 10 nebst der die Strömungsleitgeometrie 2 bildenden diskreten Profilkörper 3 bestehen beispielhaft aus Kunststoff.

In Zusammenschau von Fig. 1 und 2 wird deutlich, dass sich die Strömungsleitgeometrie 2 spiralförmig über die Gesamtlänge GL des Staubsaugerschlauchs erstreckt. Da in diesem bevorzugten Ausführungsbeispiel die Strömungsleitgeometrie 2 durch eine Mehrzahl diskreter Profilkörper 3 gebildet ist, verteilt sich die Strömungsleitgeometrie dementsprechend spiralförmig über die Gesamtlänge GL des Staubsaugerschlauchs. Derart kann eine vorteilhafte Längswirbelform über die Gesamtlänge GL des Staubsaugerschlauchs 10 erhalten werden.

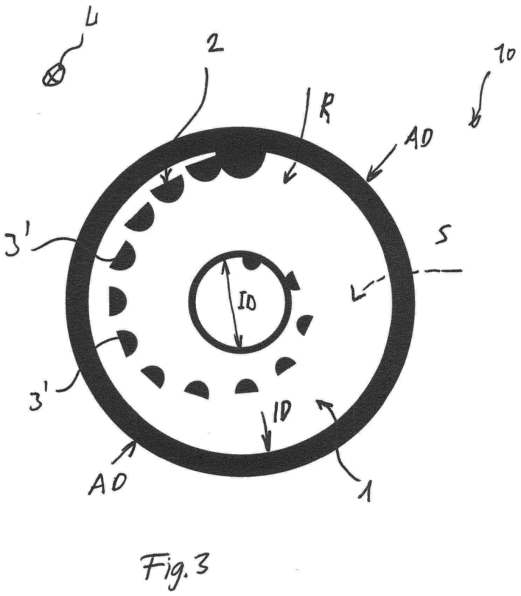

Wie bereits erwähnt, weist der Staubsaugerschlauch 10 einen konstanten Außendurchmesser AD über seine Gesamtlänge GL auf. Vorzugsweise ist der Staubsaugerschlauch 10, dies ist in Fig. 2 nicht dargestellt, als Spiralschlauch ausgebildet. Fig. 3 zeigt ein weiteres bevorzugtes Ausführungsbeispiel des erfindungsgemäßen Staubsaugerschlauchs 10. Im Unterschied zu dem Ausführungsbeispiel der Figuren 1 und 2 ist die Mehrzahl der diskreten Profilkörper 3' mit einem tonnenförmigen Querschnitt ausgestattet.

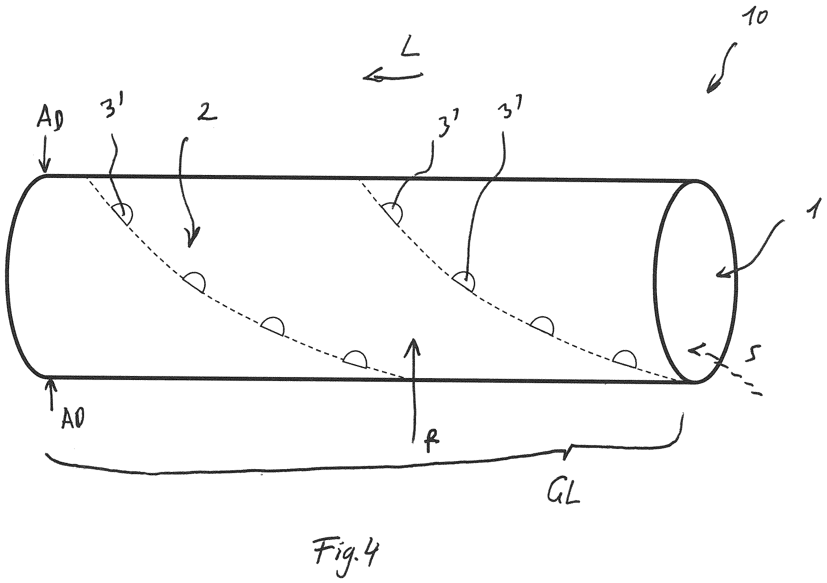

Aus der Zusammenschau der Figuren 3 und 4, wobei die Fig. 4 das Ausführungsbeispiel der Fig. 3 in Seitenansicht zeigt, ist gut zu erkennen, dass sich die Strömungsleitgeometrie 2 spiralförmig über die Gesamtlänge GL des Staubsaugerschlauchs 10 verteilt.

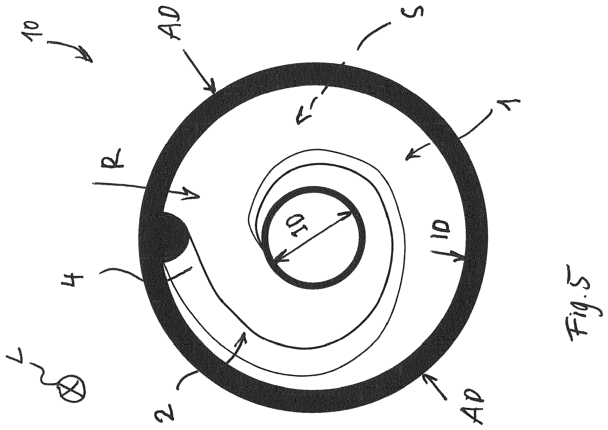

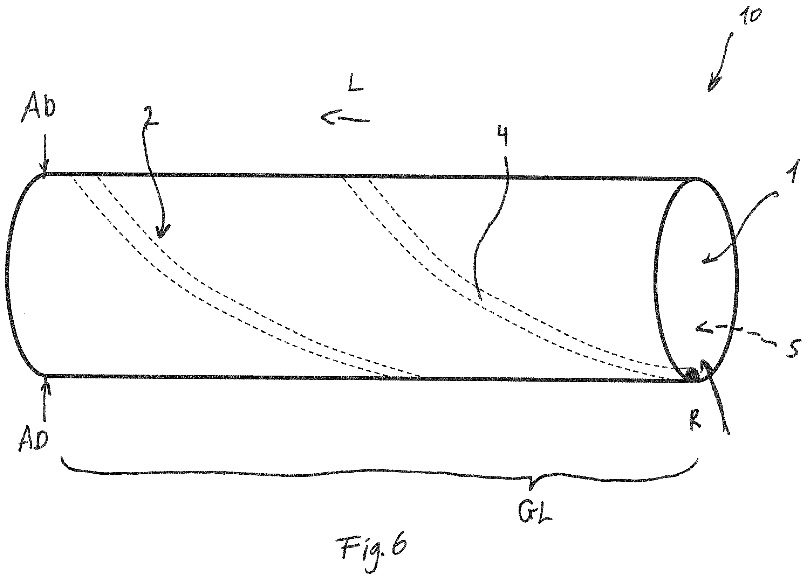

Ein drittes Ausführungsbeispiel eines erfindungsgemäßen Staubsaugerschlauchs 10 ist in den Figuren 5 und 6 dargestellt. Gut zu erkennen ist, dass sich die Strömungsleitgeometrie 2 spiralförmig über die Gesamtlänge GL des Staubsaugerschlauchs 10 erstreckt, wobei die Strömungsleitgeometrie 2 einen durchgehenden Steg 4 aufweist. Der durchgehende Steg 4 weist seinerseits einen tonnenförmigen Querschnitt auf.

Gut zu erkennen in Fig. 5 ist, dass sich die Strömungsleitgeometrie 2, hier in Form eines durchgehenden Stegs 4 mit tonnenförmigem Querschnitt, in Radialrichtung R nach innen erstreckt.

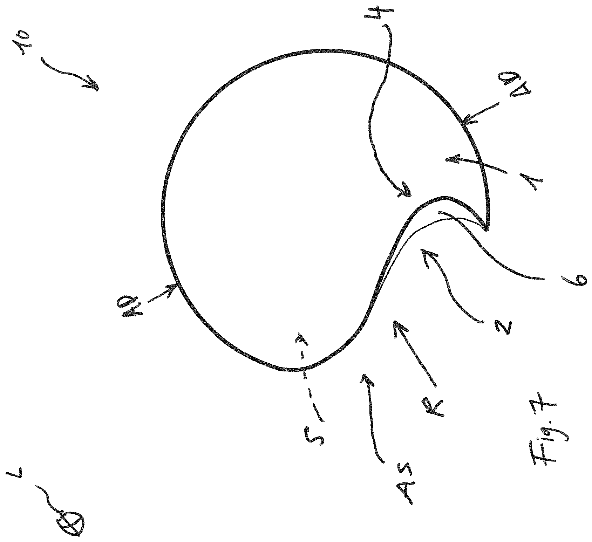

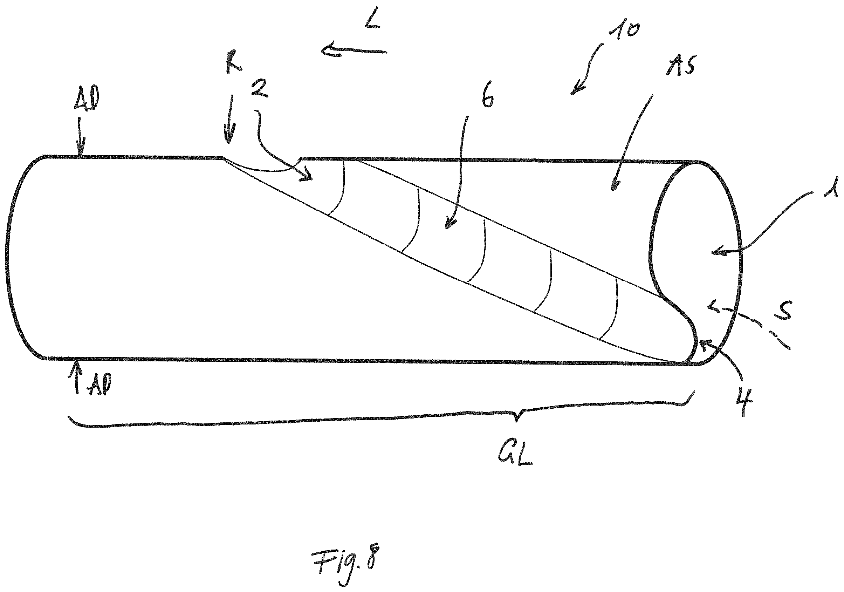

Dabei weist der Staubsaugerschlauch 10 einen konstanten Außendurchmesser AD auf. Ferner ist der Innendurchmesser ID, abgesehen von dem durchgehenden Steg 4, über die Gesamtlänge GL des Staubsaugerschlauchs 10 konstant. Die Figuren 7 und 8 zeigen ein viertes bevorzugtes Ausführungsbeispiel des Staubsaugerschlauchs 10.

Innerhalb des Lumens 1 ist eine Strömungsleitgeometrie 2 ausgebildet, mittels derer eine auftretende Saugströmung S beeinflusst werden kann. Die Strömungsleitgeometrie 2 ist dabei durch einen durchgehenden Steg 4 gebildet, der sich spiralförmig über die Gesamtlänge GL des Staubsaugerschlauchs 10 erstreckt.

Im Unterschied zum Ausführungsbeispiel der Figuren 5 und 6, bei dem der Steg 4 an eine innere Oberfläche des Staubsaugers 10 geschweißt ist, ist der Steg 4 beim Ausführungsbeispiel der Figuren 7 und 8 durch eine in das Schlauchinnere gerichtete Einwölbung 6 der Schlauchaußenseite AS gebildet. Mit anderen Worten ist der Staubsaugerschlauch 10 ausgehend von der Schlauchaußenseite AS nach innen eingewölbt oder eingeprägt, sodass sich innerhalb des Lumens 1 die besagte Strömungsleitgeometrie 2 in Form des durchgehenden Stegs 4 ausbildet. Die Strömungsleitgeometrie 2 grenzt an das Lumen 1 an. Auch über eine derart ausgebildete Strömungsleitgeometrie 2 kann vorteilhafterweise eine Längswirbelform über die Gesamtlänge GL des Staubsaugerschlauchs erzielt werden.

### Bezugszeichenliste

- 1: inneres Lumen
- 2: Strömungsleitgeometrie
- 3, 3': diskrete Profilkörper
- 4: Steg
- 6: Einwölbung
- 10: Staubsaugerschlauch
- 100: Nass- und Trockensauger
- 200: Saugsystem

- AD: Außendurchmesser
- AS: Schlauchaußenseite
- GL: Gesamtlänge
- ID: Innendurchmesser
- L: Längsrichtung
- R: Radialrichtung
- S: Saugströmung

## Patentansprüche

1. Staubsaugerschlauch (10) zum Anschluss an einen Nass- und Trockensauger (100), wobei der Staubsaugerschlauch (10) ein sich in Längsrichtung (L) erstreckendes inneres Lumen (1) aufweist,
wobei innerhalb des Lumens (1), oder an das Lumen (1) angrenzend, eine Strömungsleitgeometrie (2) ausgebildet ist, mittels der eine während des Betriebs des Nass- und Trockensaugers (100) auftretende Saugströmung (S) beeinflusst wird **dadurch gekennzeichnet, dass** die Strömungsleitgeometrie (2) einen durchgehenden Steg (4) aufweist.

2. Staubsaugerschlauch (10) nach Anspruch 1,
**dadurch gekennzeichnet, dass** sich die Strömungsleitgeometrie (2) in Radialrichtung (R) nach innen erstreckt.

3. Staubsaugerschlauch (10) nach Anspruch 1 oder 2,
**dadurch gekennzeichnet, dass** sich die Strömungsleitgeometrie (2), vorzugsweise spiralförmig, über die Gesamtlänge (GL) des Staubsaugerschlauchs (10) erstreckt oder verteilt.

4. Staubsaugerschlauch (10) nach einem der vorangehenden Ansprüche,
**dadurch gekennzeichnet, dass** die Strömungsleitgeometrie (2) eine Mehrzahl diskreter Profilkörper (3, 3`) aufweist.

5. Staubsaugerschlauch (10) nach einem der vorangehenden Ansprüche,
**dadurch gekennzeichnet, dass** die Strömungsleitgeometrie (2) einen pyramidalen oder tonnenförmigen Querschnitt aufweist.

6. Staubsaugerschlauch (10) nach einem der vorangehenden Ansprüche,
**dadurch gekennzeichnet, dass** die Strömungsleitgeometrie (2) an eine innere Oberfläche des Staubsaugerschlauchs (10) geschweißt ist.

7. Staubsaugerschlauch (10) nach der Ansprüche 1 bis 6,
**dadurch gekennzeichnet, dass** die Strömungsleitgeometrie (2) durch eine in das Schlauchinnere gerichtete Einwölbung (6) oder Einprägung der Schlauchaußenseite (AS) gebildet ist.

8. Staubsaugerschlauch (10) nach einem der vorangehenden Ansprüche,
**dadurch gekennzeichnet, dass** der Staubsaugerschlauch (10) aus Kunststoff besteht.

9. Staubsaugerschlauch (10) nach einem der vorangehenden Ansprüche,
**dadurch gekennzeichnet, dass** der Staubsaugerschlauch (10) einen im Wesentlichen konstanten Außendurchmesser (AD) aufweist.

10. Staubsaugerschlauch (10) nach einem der vorangehenden Ansprüche,
**dadurch gekennzeichnet, dass** der Staubsaugerschlauch (10) als Spiralschlauch ausgebildet ist.

11. Saugsystem (200) aufweisend einen Nass- und Trockensauger (100) und einen Staubsaugerschlauch (10) nach einem der vorangehenden Ansprüche.

## Claims

1. Vacuum-cleaner hose (10) for connection to a wet and dry vacuum cleaner (100), wherein the vacuum-cleaner hose (10) has an inner lumen (1) which extends in a longitudinal direction (L),
wherein, within the lumen (1) or adjoining the lumen (1), there is formed a flow-guiding geometry (2) by means of which a suction flow (S) occurring during the operation of the wet and dry vacuum cleaner (100) is influenced, **characterized in that** the flow-guiding geometry (2) has a continuous web (4).

2. Vacuum-cleaner hose (10) according to Claim 1,
**characterized in that** the flow-guiding geometry (2) extends inwards in a radial direction (R).

3. Vacuum-cleaner hose (10) according to Claim 1 or 2,
**characterized in that** the flow-guiding geometry (2) extends or is distributed, preferably in a spiral-shaped manner, over the entire length (GL) of the vacuum-cleaner hose (10).

4. Vacuum-cleaner hose (10) according to one of the preceding claims,
**characterized in that** the flow-guiding geometry (2) has a plurality of discrete profile bodies (3, 3').

5. Vacuum-cleaner hose (10) according to one of the preceding claims,
**characterized in that** the flow-guiding geometry (2) has a pyramidal or barrel-shaped cross section.

6. Vacuum-cleaner hose (10) according to one of the preceding claims,
**characterized in that** the flow-guiding geometry (2) is welded to an inner surface of the vacuum-cleaner hose (10).

7. Vacuum-cleaner hose (10) according to one of Claims 1 to 6,
**characterized in that** the flow-guiding geometry (2) is formed by a concavity (6) or indentation of the hose outer side (AS) that is directed into the hose interior.

8. Vacuum-cleaner hose (10) according to one of the preceding claims,
**characterized in that** the vacuum-cleaner hose (10) consists of plastic.

9. Vacuum-cleaner hose (10) according to one of the preceding claims,
**characterized in that** the vacuum-cleaner hose (10) has a substantially constant outer diameter (AD).

10. Vacuum-cleaner hose (10) according to one of the preceding claims,
**characterized in that** the vacuum-cleaner hose (10) is in the form of a spiral hose.

11. Suction system (200) having a wet and dry vacuum cleaner (100) and having a vacuum-cleaner hose (10) according to one of the preceding claims.

## Revendications

1. Tuyau d'aspirateur (10) destiné à être raccordé à un aspirateur eau et poussière (100), le tuyau d'aspirateur (10) comportant une lumière intérieure (1) qui s'étend dans la direction longitudinale (L),
une géométrie de guidage d'écoulement (2) étant formée à l'intérieur de la lumière (1), ou de manière adjacente à la lumière (1) et permettant d'influer sur un écoulement d'aspiration (S) qui se produit pendant le fonctionnement de l'aspirateur eau et poussière (100), **caractérisé en ce que** la géométrie de guidage d'écoulement (2) comporte une nervure continue (4).

2. Tuyau d'aspirateur (10) selon la revendication 1, **caractérisé en ce que** la géométrie de guidage d'écoulement (2) s'étend vers l'intérieur dans la direction radiale (R).

3. Tuyau d'aspirateur (10) selon la revendication 1 ou 2, **caractérisé en ce que** la géométrie de guidage d'écoulement (2) s'étend ou est répartie, de préférence en forme de spirale, sur toute la longueur (GL) du tuyau d'aspirateur (10).

4. Tuyau d'aspirateur (10) selon l'une des revendications précédentes, **caractérisé en ce que** la géométrie de guidage d'écoulement (2) comporte une pluralité de corps profilés discrets (3, 3').

5. Tuyau d'aspirateur (10) selon l'une des revendications précédentes, **caractérisé en ce que** la géométrie de guidage d'écoulement (2) a une section transversale pyramidale ou en forme de tonneau.

6. Tuyau d'aspirateur (10) selon l'une des revendications précédentes, **caractérisé en ce que** la géométrie de guidage d'écoulement (2) est soudée à une surface intérieure du tuyau d'aspirateur (10).

7. Tuyau d'aspirateur (10) selon les revendications 1 à 6, **caractérisé en ce que** la géométrie de guidage d'écoulement (2) est formée par un renflement (6) dirigé vers l'intérieur du tuyau ou une indentation à l'extérieur du tuyau (AS).

8. Tuyau d'aspirateur (10) selon l'une des revendications précédentes, **caractérisé en ce que** le tuyau d'aspirateur (10) est en matière synthétique.

9. Tuyau d'aspirateur (10) selon l'une des revendications précédentes, **caractérisé en ce que** le tuyau d'aspirateur (10) a un diamètre extérieur (OD) sensiblement constant.

10. Tuyau d'aspirateur (10) selon l'une des revendications précédentes, **caractérisé en ce que** le tuyau d'aspirateur (10) est réalisé sous la forme d'un tuyau en spirale.

11. Système d'aspiration (200) comprenant un aspirateur eau et poussière (100) et un tuyau d'aspirateur (10) selon l'une des revendications précédentes.
